# EUROPÄISCHE PATENTSCHRIFT

(11) **EP 3 665 001 B1**
(45) Veröffentlichungstag und Bekanntmachung des Hinweises auf die Patenterteilung: **22.11.2023**
(21) Anmeldenummer: 19745082.8
(22) Anmeldetag: 22.07.2019
(51) Int. Cl.: B30B 15/00, G01L 5/00

(54) **PRESSE MIT SENSOR ZUM MESSEN DER PRESSKRAFT**
PRESS HAVING A SENSOR FOR MEASURING THE PRESSING FORCE
PRESSE À CAPTEUR POUR MESURER LA FORCE DE PRESSION

(30) Priorität: 24.07.2018 DE 102018117898
(43) Veröffentlichungstag der Anmeldung: 17.06.2020
(73) Patentinhaber: Gebr. Schmidt Fabrik für Feinmechanik GmbH & Co. KG, 78112 St. Georgen (DE)
(72) Erfinder: MEYER, Andreas Leo, 78120 Furtwangen (DE)
(74) Vertreter: Witte, Weller & Partner Patentanwälte mbB
(86) Internationale Anmeldenummer: PCT/EP2019/069694
(87) Internationale Veröffentlichungsnummer: WO 2020/020832

(56) Entgegenhaltungen:
- WO-A1-2015/089680
- DE-A1- 3 407 620
- DE-A1- 4 134 454
- DE-A1-102005 034 424
- DE-A1-102016 012 564
- US-A- 4 412 456
- US-A- 4 526 044

## Beschreibung

Die vorliegende Erfindung betrifft eine Presse gemäß dem Oberbegriff des Anspruchs 1, mit einem Antriebsstrang, der einen beweglichen Pressstößel zur Übertragung einer Presskraft auf ein zu bearbeitendes Werkstück aufweist, und mit einem Sensor zum Messen der Presskraft, wobei der Sensor in einem Sensor-Gehäuse angeordnet ist, das in einem in dem Antriebsstrang befindlichen Hohlraum lösbar befestigbar ist, wobei das Sensor-Gehäuse eine aufspreizbare Nabe und ein Spreizelement aufweist, das dazu eingerichtet ist, die Nabe bei einer entlang einer Längsachse des Sensor-Gehäuses erfolgenden Relativbewegung von Nabe und Spreizelement aufzuspreizen, gegen eine Innenwand des Hohlraums zu drücken und damit das Sensor-Gehäuse in dem Hohlraum zu befestigen, wobei das Sensor-Gehäuse ferner eine Schraube zum Befestigen des Spreizelementes an der Nabe aufweist, wobei ein Anziehen der Schraube die Relativbewegung von Nabe und Spreizelement bewirkt.
Eine Presse, die den Oberbegriff des Anspruchs 1 bildet, ist aus der US 4,526,044 A und der US 4,412,456 A bekannt.

Bei Pressen, insbesondere bei Füge- und Montagepressen, werden häufig Sensoren eingesetzt, die während des Pressvorgangs die auf das zu bearbeitende Werkstück ausgeübte Presskraft messen. Dies dient zum einen der Überwachung des Pressvorgangs. Zum anderen lässt sich dadurch die Presskraft sehr exakt einstellen bzw. kontrolliert steuern.

Eine Presse der oben genannten Art mit einem Sensor zum Messen der Presskraft wird von der Anmelderin bereits seit Jahren unter dem Namen ElectricPress vertrieben. Hierbei handelt es sich um eine elektromotorisch angetriebene Presse, bei der der Antriebsstrang eine Rundwelle mit Verzahnung aufweist, welche mithilfe einer Motor-Getriebe-Kombination sowie einem Stirnradvorgelege angetrieben wird. Zu dem Antriebsstrang gehört ebenfalls ein Pressstößel, der von dem Motor über das Getriebe und die Verzahnung angetrieben wird und die Presskraft auf das zu bearbeitende Werkstück überträgt. Der erwähnte Sensor zum Messen der Messkraft ist bei der benannten Presse in einem Hohlraum angeordnet, der sich an einem stirnseitigen Ende des Pressstößels befindet.

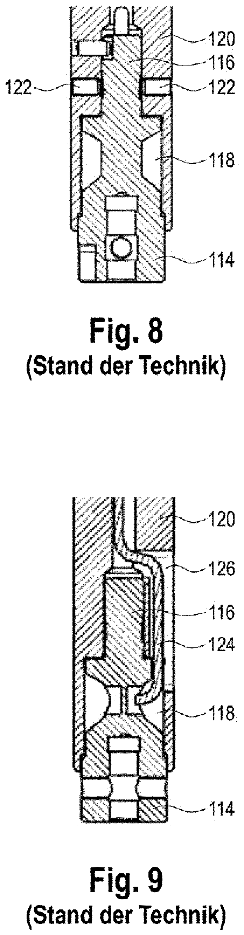

Fig. 8 und 9 zeigen die Art der Anbringung des Sensors an dem Pressstößel, wie sie bei der bekannten Presse ElectricPress realisiert ist. Der Sensor ist in einem Sensor-Gehäuse 114 untergebracht, das im Bereich seines oberen Endes einen konisch verjüngten Zapfen 116 aufweist. Dieser Zapfen 116 wird in einen im Pressstößel 120 stirnseitig angeordneten Hohlraum 118 eingeführt. Um das Sensor-Gehäuse 114 gegen Herausfallen zu sichern, werden zwei einander gegenüberliegende Gewindestifte 122 auf den konisch verjüngten Zapfen 116 radial von außen zugestellt.

Wenngleich sich diese Art der Anbringung des Sensor-Gehäuses 114 als insgesamt vorteilhaft und stabil erwiesen hat, haben sich im Laufe der Zeit mehrere Nachteile herausgestellt. Die Gewindestifte 122 üben je nach Anzugsmoment eine Radialkraft auf den Zapfen 116 des Sensor-Gehäuses 114 aus. Insbesondere bei ungleichmäßigem Anziehen beider Gewindestifte 122 wird eine Radialkraft erzeugt, die Spannungen innerhalb des Sensor-Gehäuses 114 hervorrufen kann. Vor allem aber können unterschiedliche Anzugsdrehmomente der Gewindestifte 122 auf den Befestigungszapfen 116 ein Biegemoment ausüben. Dieses Biegemoment wie auch die zuvor genannten inneren Spannungen können sich negativ auf die Messeigenschaften des Sensors auswirken. Dies hat zur Folge, dass es zu Verfälschungen der vom Sensor gelieferten Messwerte kommen kann.

Zudem muss der Sensor bei einem Lösen und nachträglichen Anziehen eines oder beider Gewindestifte 122 neu kalibriert werden. Eine solche Kalibrierung ist nach jeder Inspektion oder Reparatur vonnöten. Auch hier muss wiederum darauf geachtet werden, dass die Gewindestifte 122 nach ihrem Anziehen keine allzu großen Querkräfte auf das Sensor-Gehäuse 114 ausüben.

Ferner ist auch die Art der Führung des elektrischen Anschlusskabels, welches für für den Anschluss des Sensors benötigt wird, etwas umständlich. Wie in Fig. 9 gezeigt, muss das Sensorkabel 124 an dem massiv ausgeführten Befestigungszapfen 116 vorbeigeführt werden. Um Kollisionskanten und/oder Quetschkanten zu vermeiden, muss hierzu im Pressstößel 120 eine Aussparung 126 vorgesehen werden, innerhalb derer das Anschlusskabel 124 verlaufen kann. Die Herstellung dieser Aussparung 126 ist nicht nur aufwändig, sondern kann unter Umständen auch noch zu einer Minderung der Festigkeit des Pressstößels 120 führen.

Es ist daher eine Aufgabe der vorliegenden Erfindung, eine Presse mit einem Sensor zum Messen der Presskraft derart weiterzuentwickeln, dass die Art der Unterbringung des Sensors innerhalb der Presse vorteilhafter ausgestaltet ist als dies im Stand der Technik bisher der Fall war. Insbesondere ist es eine Aufgabe, eine biegemomentfreie Montage des Sensor-Gehäuses zu realisieren und das Abführen des Anschlusskabels des Sensors besser als bisher auszugestalten.

Diese Aufgabe wird ausgehend von der Presse der eingangs genannten Art dadurch gelöst, das Spreizelement ein zentrisch angeordnetes Innengewinde aufweist, in das die Schraube durch die Nabe hindurch eingreift, und dass das Spreizelement eine Durchgangsöffnung aufweist, durch die ein Anschlusskabel des Sensors hindurchgeführt ist, wobei die Durchgangsöffnung versetzt zu dem Innengewinde angeordnet ist und parallel zu diesem verläuft.

Das Sensor-Gehäuse wird erfindungsgemäß also mithilfe eines Spreizelementes, das eine am Sensorgehäuse angeordnete, aufspreizbare Nabe aufspreizt, in dem Hohlraum befestigt. Die Befestigung des Sensor-Gehäuses erfolgt innerhalb des Hohlraums, also quasi von innen. Durch das Aufspreizen der aufspreizbaren Nabe wird das Sensor-Gehäuse an der Stelle der Nabe radial nach außen gegen eine Innenwand des Hohlraums gedrückt und mit dem Hohlraum verklemmt.

Diese Art der Klemmung des Sensor-Gehäuses innerhalb des Hohlraums erzeugt keinerlei Querkräfte, da die Kraft von dem Sensor-Gehäuse vorzugsweise exakt radial in die Innenwand des Hohlraums eingeleitet wird. Biegemomente, wie sie bei der bisher bekannten Lösung entstehen konnten, werden bei dieser Art der Klemmung nicht mehr erzeugt. Eine mehrfache Kalibrierung des Sensors ist daher nicht notwendig.

Erfindungsgemäß weist das Spreizelement eine Durchgangsöffnung auf, durch die ein Anschlusskabel des Sensors hindurchgeführt ist. Anders als bei der bisher bekannten Lösung ist also keine extra Aussparung mehr notwendig, um das Anschlusskabel des Sensors aus dem Sensor-Gehäuse hinauszuführen. Das Spreizelement sitzt wie eine Art Deckel auf der vorzugsweise endseitig am Sensor-Gehäuse angeordneten Nabe und das Anschlusskabel ist durch diesen Deckel bzw. das Spreizelement hindurchgeführt.

Gemäß einer bevorzugen Ausgestaltung der vorliegenden Erfindung weist die aufspreizbare Nabe eine symmetrisch zu der Längsachse des Sensor-Gehäuses verlaufende, konische Innenseite auf. Entsprechend dazu weist das Spreizelement eine symmetrisch zu einer Längsachse des Spreizelementes verlaufende, konische Außenseite auf, wobei die Außenseite des Spreizelementes bei der Relativbewegung von Nabe und Spreizelement an der Innenseite der Nabe abgleitet.

Durch diese beiden konischen, aneinander anliegenden Seiten bzw. Flächen des Spreizelementes und der Nabe lässt sich die Klemmkraft ideal dosieren. Je weiter das Spreizelement in die Nabe hineingezogen bzw. hineingedrückt wird, desto mehr spreizt sich die Nabe auf und desto größer wird die Klemmkraft, die der Befestigung des Sensor-Gehäuses in dem Hohlraum dient.

Erfindungsgemäß weist das Gehäuse ferner eine Schraube zum Befestigen des Spreizelementes an der Nabe auf, wobei ein Anziehen der Schraube die Relativbewegung von Nabe und Spreizelement bewirkt.

Je stärker die Schraube angezogen wird, desto mehr wird das Spreizelement in die Nabe hineingezogen bzw. hineingedrückt und desto weiter wird die Nabe aufgespreizt. Die Befestigung des Sensor-Gehäuses kann somit relativ einfach erfolgen. Zudem lässt sich die Klemmkraft je nach Anzugsmoment der Schraube dosieren. Eine einfache Lösbarkeit des Sensor-Gehäuses von dem im Antriebsstrang vorgesehenen Hohlraum ist ebenfalls garantiert.

Das Spreizelement weist erfindungsgemäß ein zentrisch angeordnetes Innengewinde auf, in das die Schraube durch die Nabe hindurch eingreift.

Die Schraube ist vorzugsweise als Zugschraube ausgestaltet, welche das Spreizelement mit zunehmendem Anzugsmoment in die aufspreizbare Nabe hineinzieht. Aufgrund der konisch aneinander abgleitenden Flächen ist ein Verkippen des Spreizelementes gegenüber der Nabe nahezu ausgeschlossen. Die zentrische Anordnung der Schraube sowie des entsprechenden Innengewindes, in das die Schraube eingreift, garantiert eine exakt radiale Krafteinleitung zwischen der Nabe des Sensor-Gehäuses und der Innenwand des Hohlraums.

Die Durchgangsöffnung im Spreizelement ist versetzt zu dem Innengewinde angeordnet und verläuft parallel zu diesem.

Gemäß einer weiteren Ausgestaltung weist die Nabe mehrere Längsschlitze auf.

Die Nabe ist gemäß dieser Ausgestaltung also geschlitzt ausgeführt. Diese Trennschlitze verbessern die Aufspreizbarkeit der Nabe, so dass die Nabe mit relativ geringem Kraftaufwand durch das Spreizelement aufgespreizt werden kann.

Alternativ dazu wäre es auch möglich, die Nabe ungeschlitzt aus einem dehnbaren Material auszugestalten oder anstelle von Schlitzen Materialeinschnürungen vorzusehen.

Gemäß einer weiteren Ausgestaltung weist das Sensor-Gehäuse ferner eine Verdrehsicherung mit einem Verdrehsicherungselement auf, das durch einen der Längsschlitze in der Nabe hindurch in eine in dem Spreizelement angeordnete Öffnung einsetzbar ist und dadurch ein Verdrehen des Spreizelementes gegenüber der Nabe verhindert.

Diese Verdrehsicherung erweist sich als vorteilhaft, da die Gefahr eines Verkippens des Spreizelementes innerhalb der Nabe hierdurch minimiert wird. Zudem ist die Verdrehsicherung insbesondere in Kombination mit der oben genannten Durchgangsöffnung im Spreizelement, durch das das Anschlusskabel des Sensors hindurchgeführt ist, von Vorteil. Beim Aufspreizen der Nabe mithilfe des Spreizelements kann es aufgrund der Verdrehsicherung nicht zu einem Verdrehen des Anschlusskabels kommen.

Gemäß einer bevorzugten Ausgestaltung der vorliegenden Erfindung ist der Hohlraum, innerhalb dessen das Sensor-Gehäuse befestigt ist, im Pressstößel angeordnet. Besonders bevorzugt ist der Hohlraum im Bereich des stirnseitigen Endes des Pressstößels angeordnet.

Dies hat den Vorteil, dass der Sensor zum Messen der Presskraft möglichst nahe an der Stelle des Pressvorgangs platziert ist. Dementsprechend lässt sich die Genauigkeit der Messung der Presskraft erhöhen. Zudem ist das Sensor-Gehäuse von der Unterseite des Pressstößels relativ einfach zugänglich, so dass sich der Sensor mit samt seinem Sensor-Gehäuse zum Austauschen oder Referieren sehr einfach demontieren und erneut montieren lässt.

Gemäß einer weiteren Ausgestaltung weist der Sensor zumindest einen Dehnmessstreifen auf.

Wenngleich dies nur eine von vielen möglichen Realsierungen des Sensors ist, hat die Verwendung eines oder mehrerer Dehnmessstreifen den Vorteil, dass diese sehr zuverlässig arbeiten und zudem kostengünstig sind.

Gemäß einer weiteren Ausgestaltung der erfindungsgemäßen Presse weist der Antriebsstrang einen Elektromotor zum Antreiben des Pressstößels auf.

Derartige elektromotorisch angetriebene Pressen haben eine hohe Energieeffizienz und verursachen zudem einen relativ geringen Geräuschpegel. Es versteht sich jedoch, dass anstelle eines Elektromotors auch ein hydraulischer, pneumatischer oder rein mechanischer (handbetätigter) Antrieb vorgesehen sein kann, ohne den Rahmen der vorliegenden Erfindung zu verlassen.

Ein Ausführungsbeispiel der Erfindung ist in den Zeichnungen dargestellt und wird in der nachfolgenden Beschreibung näher erläutert. Es zeigen:
- Fig. 1: eine Frontansicht einer Presse gemäß der vorliegenden Erfindung;
- Fig. 2: einen Pressstößel, welcher in der erfindungsgemäßen Presse zum Einsatz komen kann;
- Fig. 3: eine teilweise geschnittene Ansicht der in Fig. 1 gezeigten Presse;
- Fig. 4: eine geschnittene Detailansicht eines Details aus Fig. 3;
- Fig. 5: eine Explosionsdarstellung eines in der erfindungsgemäßen Presse verbauten Sensor-Gehäuses;
- Fig. 6: eine Schnittansicht des zusammengebauten Sensor-Gehäuses aus Fig. 5;
- Fig. 7: eine Schnittansicht eines Teils des Sensor-Gehäuses aus Fig. 5;
- Fig. 8: eine Schnittansicht eines Details einer aus dem Stand der Technik bekannten Presse; und
- Fig. 9: eine weitere Schnittansicht des in Fig. 8 dargestellten Details der aus dem Stand der Technik bekannten Presse.

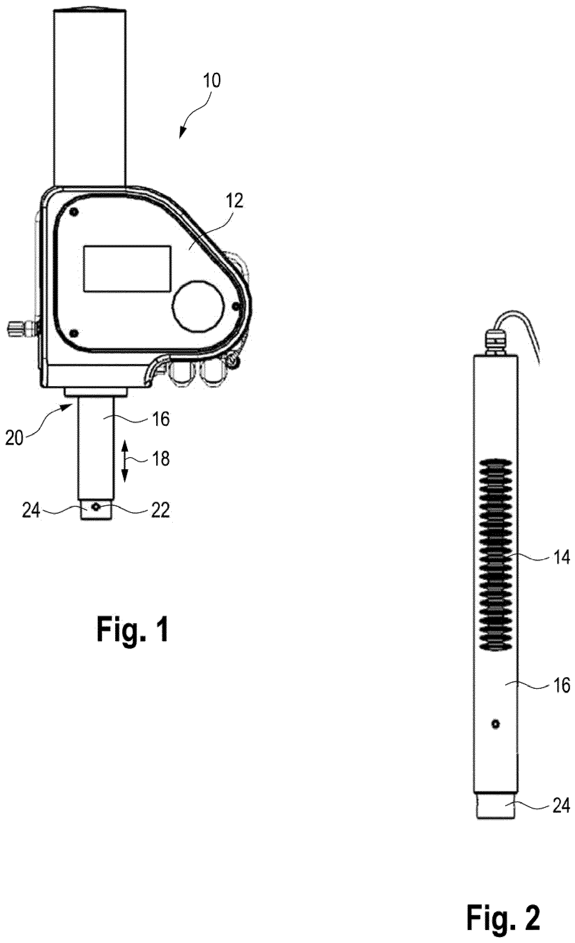

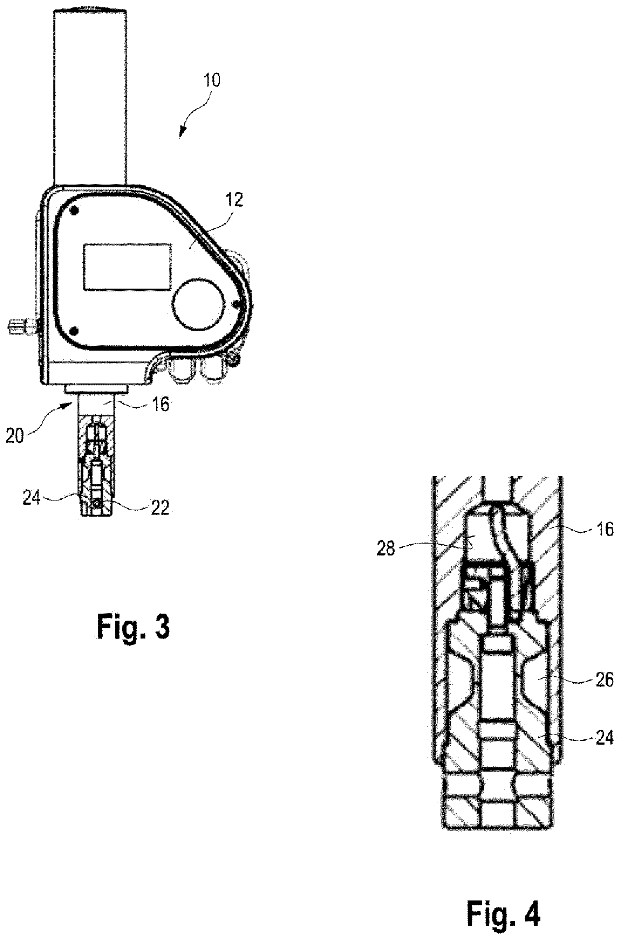

Die Fig. 1-4 zeigen ein Ausführungsbeispiel der erfindungsgemäßen Presse sowie Details der darin verbauten Bauteile in unterschiedlichen Ansichten. Die Presse ist darin in ihrer Gesamtheit mit der Bezugsziffer 10 gekennzeichnet.

In dem gezeigten Ausführungsbeispiel ist die Presse 10 als elektromotorisch angetriebene Presse realisiert. Zum Antriebsstrang der Presse 10 gehört ein Elektromotor (nicht gezeigt), welcher innerhalb eines Gehäuses 12 verbaut ist. Der Elektromotor ist über ein Getriebe, welches hier ebenfalls nicht gezeigt ist, mit einem Zahnstangen-Antrieb verbunden. Der Elektromotor treibt typischerweise eine Rundwelle an, die mit einer Verzahnung versehen ist und direkt oder über das Getriebe mit einer axial verschiebbaren Zahnstange 14 verbunden ist. An der Zahnstange 14 ist ein Pressstößel 16 montiert. Vorzugsweise ist die Zahnstange 14 integral mit dem Pressstößel 16 verbunden und als ein und dasselbe Bauteil ausgeführt. Die Bewegung des Motors wird somit in eine lineare Bewegung der Zahnstange 14 und des Pressstößels 16 umgesetzt. Die Bewegungsrichtung dieser Bewegung ist in Fig. 1 mithilfe des Doppelpfeils 18 angedeutet. Der Motor, das Getriebe, der Zahnstangen-Antrieb sowie der Pressstößel 16 bilden den Antriebsstrang 20 der Presse 10.

Es sei darauf hingewiesen, dass anstelle eines Zahnstangen-Antriebs auch ein Spindelantrieb oder eine andere Art von Linearantrieb vorgesehen sein kann.

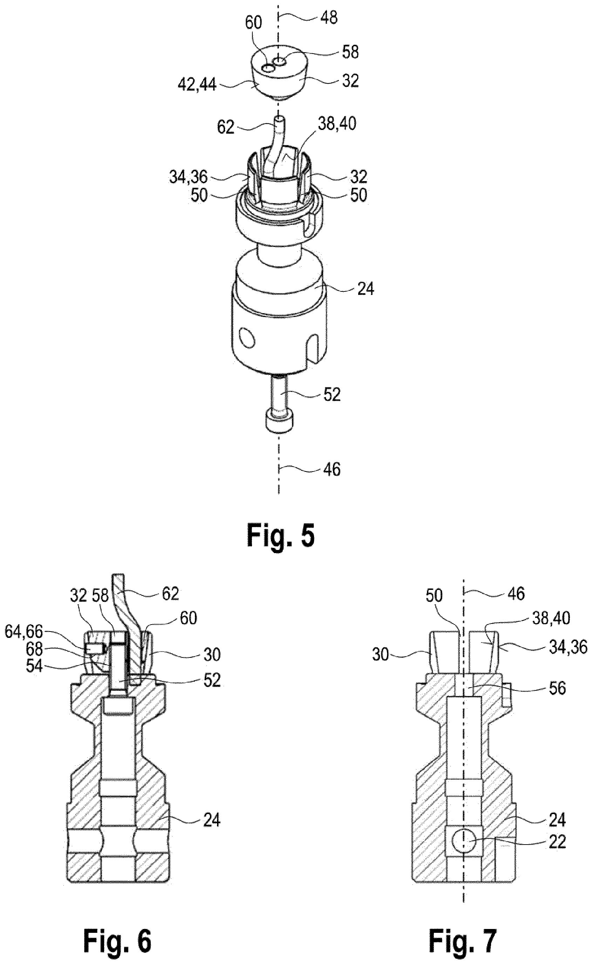

An der Unterseite des Pressstößels 16 ist ein Sensor 22 zum Messen der Presskraft angeordnet. Der Sensor 22 ist in einem Sensor-Gehäuse 24 verbaut, das im Detail in Fig. 5-7 gezeigt ist.

Das Sensor-Gehäuse 24 ist in dem vorliegend gezeigten Ausführungsbeispiel in einem Hohlraum 26 lösbar befestigt, welcher sich am unteren stirnseitigen Ende des Pressstößels 16 befindet. Die Anordnung des Sensors 22 möglichst nahe der Stelle des Pressvorgangs ist aus messtechnischer Sicht von Vorteil, da dies die Messgenauigkeit erhöht. Grundsätzlich ließe sich der Sensor 22 bzw. das Sensor-Gehäuse 24 jedoch auch in einem Hohlraum unterbringen, welcher an einer andere Stelle des Antriebsstranges 20 angeordnet ist. Der Hohlraum 26 muss nicht zwangsläufig am stirnseitigen Ende des Pressstößels 16 vorgesehen sein.

In dem dargestellten Ausführungsbeispiel wird das Sensor-Gehäuse 24 an einer Innenwand 28 des Hohlraums 26 durch Klemmung befestigt. Das Sensor-Gehäuse 24 weist dazu an seinem oberen Ende eine aufspreizbare Nabe 30 sowie ein Spreizelement 32 auf, das dazu eingerichtet ist, die Nabe 30 aufzuspreizen und mit ihrer Außenseite 34 gegen die Innenwand 28 des Hohlraums 26 zu drücken.

Die Nabe 30 weist auf ihrer Außenseite 34 eine zylindrische Mantelfläche 36 und auf ihrer Innenseite 38 eine konisch ausgebildete Innenfläche 40 auf. Korrespondierend zu der konisch ausgebildeten Innenfläche 40 weist das Spreizelement 32 auf seiner Außenseite 42 eine konisch ausgebildete Mantelfläche 44 auf. Die konische Innenfläche 40 der Nabe 30 verläuft symmetrisch zu der Längsachse 46 des Sensor-Gehäuses 24. Ebenso verläuft die konische Mantelfläche 44 des Spreizelementes 32 symmetrisch zu der Längsachse 48 des Spreizelementes 32. Beide Längsachsen 46, 48 fallen in montiertem Zustand des Sensor-Gehäuses 24 aufeinander.

Das Aufspreizen der Nabe 30 erfolgt durch eine Relativbewegung von Nabe 30 und Spreizelement 32 entlang der Längsachse 46 des Sensor-Gehäuses 24. Zur Gewährleistung der Aufspreizbarkeit der Nabe 30 ist die Nabe 30 in dem vorliegenden Ausführungsbeispiel geschlitzt ausgeführt. Sie weist mehrere Längsschlitze 50 auf. Je weiter das Spreizelement 32 in die Nabe 30 hineinbewegt wird, desto mehr wird die Nabe 30 aufgespreizt und gegen die Innenwand 28 des Hohlraums 26 gedrückt.

Die Relativbewegung des Spreizelementes 32 gegenüber der Nabe 30 wird in dem vorliegenden Ausführungsbeispiel durch eine Schraube 52 bewirkt. Die Schraube 52 wird von unten in das Sensorgehäuse 24 eingesetzt und mit einem im Inneren des Spreizelementes 32 zentrisch angeordneten Innengewinde 54 verschraubt. Unterhalb der Nabe 30 ist dazu eine Durchgangsöffnung 56 im Sensor-Gehäuse 24 vorgesehen, durch die die Schraube 52 durch die Nabe 30 hindurch in das Innengewinde 54 des Spreizelementes 32 einführbar ist.

Die Schraube 52 fungiert als Zugschraube, welche das Spreizelement 32 mit zunehmendem Anzug in die aufspreizbare Nabe 30 hineinzieht. Während dieser Anzugsbewegung gleitet die konische Mantelfläche 44 des Spreizelementes 32 an der konischen Innenfläche 40 der Nabe 30 ab. Das Spreizelement 32 selbst wird dabei lediglich axial entlang der Längsachsen 46, 48 verschoben. Ein Verkippen des Spreizelementes oder Verkanten innerhalb der Nabe 30 ist aufgrund der konischen Außen- bzw. Innenflächen 44, 40 nahezu ausgeschlossen. Die aufgespreizte Nabe 30 übt daher in montiertem Zustand lediglich Kräfte in axialer Richtung senkrecht zu der Innenwand 28 des Hohlraums 26 aus. Hierdurch wird eine sichere Klemmung des Sensor-Gehäuses 24 innerhalb des Pressstößels 16 ermöglicht. Verspannungen oder Biegemomente, welche die Messgenauigkeit des Sensors 22 negativ beeinflussen könnten, entstehen dabei nicht.

Zusätzlich zu der zentrischen Öffnung 58, innerhalb derer das Innengewinde 54 für die Schraube 52 vorgesehen ist, weist das Spreizelement 32 noch eine weitere DurchgangsÖffnung 60 auf (siehe Fig. 5 und 6). Die Durchgangsöffnung 60 ist parallel versetzt zu der Öffnung 58 und damit auch parallel versetzt zu dem Innengewinde 54 angeordnet. Durch diese Durchgangsöffnung 60 lässt sich ein Anschlusskabel 62 durch das Spreizelement 32 hindurchführen.

Um ein Abscheren des Anschlusskabels 62 während der Befestigung des Sensor-Gehäuses 24 in dem Hohlraum 26 zu verhindern, weist das Sensorgehäuse 24 gemäß dieser Ausgestaltung ferner eine Verdrehsicherung 64 auf, die ein Verdrehen des Spreizelementes 32 um seine Längsachse 48 herum verhindert. Die Verdrehsicherung 64 erfolgt anhand eines Verdrehsicherungselements 66, das durch einen der Längsschlitze 50 durch die Nabe 30 hindurch in eine Öffnung eingesetzt ist, die in die konische Mantelfläche 44 des Spreizelementes 32 in radialer Richtung eingebracht ist. Als Verdrehsicherungselement 66 kann beispielsweise ein Führungsstift verwendet werden. Dieser Führungsstift wird innerhalb des entsprechenden Längsschlitzes 50 der Nabe 30 längsgeführt.

Insgesamt ergibt sich somit eine Anbringung des Sensor-Gehäuses 24 am Antriebsstrang 20 der Presse 10, welche biegemomentfrei ist und somit höchste Messgenauigkeiten des Sensors 22 ermöglicht. Zudem lässt sich das Sensor-Gehäuse 24 relativ einfach am Antriebsstrang 20 bzw. dem Pressstößel 16 montieren und wieder demontieren. Der elektrische Anschluss des Sensors 22 kann ebenfalls relativ einfach erfolgen, ohne dass es hierzu einer Anpassung an der Form des Pressstößels 16 bedarf.

Es versteht sich, dass das in Fig. 1-7 gezeigte Ausführungsbeispiel nur eines von vielen möglichen Ausführungsbeispielen der vorliegenden Erfindung ist. Mehrere Anpassungen/Änderungen ließen sich vornehmen, ohne den Rahmen der vorliegenden Erfindung zu verlassen.

Beispielsweise ist die Verwendung der Schraube 52 nicht zwangsläufig notwendig, da das Spreizelement 32 auch in anderer Form an der Nabe 30 befestigt werden kann, um diese aufzuspreizen.

Eine konische Ausbildung der Mangelfläche 44 des Spreizelementes 32 ist ebenfalls nicht zwangsläufig notwendig. Diese kann beispielsweise auch ballig bzw. konvex ausgeführt sein, wobei eine dosierte Einstellung der Klemmkraft dann nur noch bedingt möglich wäre.

Anstelle eines Elektromotors zum Antreiben der Presse ist auch ein hydraulischer, pneumatischer oder mechanischer (handbetätigter) Antrieb möglich.

## Patentansprüche

1. Presse (10) mit einem Antriebsstrang (20), der einen beweglichen Pressstößel (16) zur Übertragung einer Presskraft auf ein zu bearbeitendes Werkstück aufweist, und mit einem Sensor (22) zum Messen der Presskraft, wobei der Sensor (22) in einem Sensor-Gehäuse (24) angeordnet ist, das in einem in dem Antriebsstrang (20) befindlichen Hohlraum (26) lösbar befestigbar ist, wobei das Sensor-Gehäuse (24) eine aufspreizbare Nabe (30) und ein Spreizelement (32) aufweist, das dazu eingerichtet ist, die Nabe (30) bei einer entlang einer Längsachse (46) des Sensor-Gehäuses (24) erfolgenden Relativbewegung von Nabe (30) und Spreizelement (32) aufzuspreizen, gegen eine Innenwand (28) des Hohlraums (26) zu drücken und damit das Sensor-Gehäuse (24) in dem Hohlraum (26) zu befestigen, wobei das Sensor-Gehäuse (24) ferner eine Schraube (52) zum Befestigen des Spreizelementes (32) an der Nabe (30) aufweist, wobei ein Anziehen der Schraube (52) die Relativbewegung von Nabe (30) und Spreizelement (32) bewirkt,
**dadurch gekennzeichnet, dass** das Spreizelement (32) ein zentrisch angeordnetes Innengewinde (54) aufweist, in das die Schraube (52) durch die Nabe (30) hindurch eingreift, und dass das Spreizelement (32) eine Durchgangsöffnung (60) aufweist, durch die ein Anschlusskabel (62) des Sensors (22) hindurchgeführt ist, wobei die Durchgangsöffnung (60) versetzt zu dem Innengewinde (54) angeordnet ist und parallel zu diesem verläuft.

2. Presse nach Anspruch 1, wobei die aufspreizbare Nabe (30) eine symmetrisch zu der Längsachse (46) des Sensor-Gehäuses (24) verlaufende, konische Innenseite (38) und das Spreizelement (32) eine symmetrisch zu einer Längsachse (48) des Spreizelementes (32) verlaufende, konische Außenseite (42) aufweist, wobei die Außenseite (42) des Spreizelementes (32) bei der Relativbewegung von Nabe (30) und Spreizelement (32) an der Innenseite (38) der Nabe (30) abgleitet.

3. Presse nach Anspruch 1 oder 2, wobei die Nabe (30) mehrere Längsschlitze (50) aufweist.

4. Presse nach Anspruch 3, wobei das Sensor-Gehäuse (24) ferner eine Verdrehsicherung (64) mit einem Verdrehsicherungselement (66) aufweist, das durch einen der Längsschlitze (50) hindurch in eine in dem Spreizelement (32) angeordnete Öffnung (68) einsetzbar ist und dadurch ein Verdrehen des Spreizelementes (32) gegenüber der Nabe (30) verhindert.

5. Presse nach einem der Ansprüche 1-4, wobei der Hohlraum (26) innerhalb des Pressstößels (16) angeordnet ist.

6. Presse nach Anspruch 5, wobei der Hohlraum (26) sich zu einem stirnseitigen Ende des Pressstößels (16) hin öffnet.

7. Presse nach einem der Ansprüche 1-6, wobei der Sensor (22) zumindest einen Dehnmessstreifen aufweist.

8. Presse nach einem der Ansprüche 1-7, wobei der Antriebsstrang (20) eine Elektromotor zum Antreiben des Pressstößels (16) aufweist.

## Claims

1. Press (10) having a drive train (20) which has a movable press ram (16) for transmitting a pressing force to a workpiece to be processed, and having a sensor (22) for measuring the pressing force, wherein the sensor (22) is arranged in a sensor housing (24) which is releasably fastenable in a cavity (26) which is situated in the drive train (20), wherein the sensor housing (24) has a spreadable hub (30) and a spreading element (32) which is configured such that, during a relative movement of hub (30) and spreading element (32) along a longitudinal axis (46) of the sensor housing (24), it spreads the hub (30) open, and it presses said hub against an inner wall (28) of the cavity (26), and it thus fastens the sensor housing (24) in the cavity (26), wherein the sensor housing (24) furthermore has a screw (52) for fastening the spreading element (32) to the hub (30), wherein tightening of the screw (52) brings about the relative movement of hub (30) and spreading element (32),
**characterized in that** the spreading element (32) has a centrally arranged internal thread (54) into which the screw (52) engages through the hub (30), and **in that** the spreading element (32) has a passage opening (60) through which a connection cable (62) of the sensor (22) is led, wherein the passage opening (60) is arranged offset from the internal thread (54) and extends parallel thereto.

2. Press according to Claim 1, wherein the spreadable hub (30) has a conical inner side (38) extending symmetrically in relation to the longitudinal axis (46) of the sensor housing (24) and the spreading element (32) has a conical outer side (42) extending symmetrically in relation to a longitudinal axis (48) of the spreading element (32), wherein, during the relative movement of hub (30) and spreading element (32), the outer side (42) of the spreading element (32) slides on the inner side (38) of the hub (30).

3. Press according to Claim 1 or 2, wherein the hub (30) has multiple longitudinal slots (50).

4. Press according to Claim 3, wherein the sensor housing (24) furthermore has a relative-rotation-prevention means (64) with a relative-rotation-prevention element (66) which is insertable through one of the longitudinal slots (50) into an opening (68) arranged in the spreading element (32) and, in this way, prevents rotation of the spreading element (32) in relation to the hub (30).

5. Press according to one of Claims 1-4, wherein the cavity (26) is arranged within the press ram (16).

6. Press according to Claim 5, wherein the cavity (26) opens towards an end face of the press ram (16).

7. Press according to one of Claims 1-6, wherein the sensor (22) has at least one strain gauge.

8. Press according to one of Claims 1-7, wherein the drive train (20) has an electric motor for driving the press ram (16).

## Revendications

1. Presse (10) comportant une chaîne cinématique (20) qui présente un coulisseau de presse (16) mobile servant à la transmission d'une force de pression à une pièce à usiner, et comportant un capteur (22) servant à la mesure de la force de pression, le capteur (22) étant disposé dans un boîtier de capteur (24) qui peut être fixé de manière amovible dans une cavité (26) se trouvant dans la chaîne cinématique (20), le boîtier de capteur (24) présentant un moyeu (30) expansible et un élément d'expansion (32) qui est conçu pour élargir le moyeu (30) lors d'un mouvement relatif du moyeu (30) et de l'élément d'expansion (32) qui s'effectue le long d'un axe longitudinal (46) du boîtier de capteur (24), pour le presser contre une paroi intérieure (28) de la cavité (26) et pour ainsi fixer le boîtier de capteur (24) dans la cavité (26), le boîtier de capteur (24) présentant en outre une vis (52) servant à la fixation de l'élément d'expansion (32) au moyeu (30), un serrage de la vis (52) provoquant le mouvement relatif du moyeu (30) et de l'élément d'expansion (32),
**caractérisée en ce que** l'élément d'expansion (32) présente un filetage intérieur (54) disposé centralement, dans lequel la vis (52) vient en prise à travers le moyeu (30), et **en ce que** l'élément d'expansion (32) présente une ouverture de passage (60) à travers laquelle un câble de raccordement (62) du capteur (22) est guidé, l'ouverture de passage (60) étant disposée de manière décalée par rapport au filetage intérieur (54) et s'étendant parallèlement à celui-ci.

2. Presse selon la revendication 1, le moyeu (30) expansible présentant un côté intérieur (38) conique s'étendant symétriquement par rapport à l'axe longitudinal (46) du boîtier de capteur (24) et l'élément d'expansion (32) présentant un côté extérieur (42) conique s'étendant symétriquement par rapport à un axe longitudinal (48) de l'élément d'expansion (32), le côté extérieur (42) de l'élément d'expansion (32) glissant sur le côté intérieur (38) du moyeu (30) lors du mouvement relatif du moyeu (30) et de l'élément d'expansion (32).

3. Presse selon la revendication 1 ou 2, le moyeu (30) présentant plusieurs fentes longitudinales (50).

4. Presse selon la revendication 3, le boîtier de capteur (24) présentant en outre une fixation anti-rotation (64) dotée d'un élément de fixation anti-rotation (66) qui peut être inséré à travers l'une des fentes longitudinales (50) dans une ouverture (68) disposée dans l'élément d'expansion (32) et empêche ainsi une rotation de l'élément d'expansion (32) par rapport au moyeu (30).

5. Presse selon l'une des revendications 1 à 4, la cavité (26) étant disposée à l'intérieur du coulisseau de presse (16).

6. Presse selon la revendication 5, la cavité (26) s'ouvrant vers une extrémité frontale du coulisseau de presse (16).

7. Presse selon l'une des revendications 1 à 6, le capteur (22) présentant au moins une jauge extensométrique.

8. Presse selon l'une des revendications 1 à 7, la chaîne cinématique (20) présentant un moteur électrique servant à l'entraînement du coulisseau de presse (16).
